# EUROPÄISCHE PATENTSCHRIFT

(11) **EP 0 707 361 B1**
(45) Veröffentlichungstag und Bekanntmachung des Hinweises auf die Patenterteilung: **12.08.1998**
(21) Anmeldenummer: 94116138.2
(22) Anmeldetag: 13.10.1994
(51) Int. Cl.: H01S 3/06, G02B 6/42

(54) **Optischer Faserverstärker**
Optical fibre amplifier
Amplificateur à fibre optique

(43) Veröffentlichungstag der Anmeldung: 17.04.1996
(73) Patentinhaber: ANT Nachrichtentechnik GmbH, D-71522 Backnang (DE)
(72) Erfinder: Hauer, Heiner, D-Fellbach (DE); Kuke, Albrecht, D-71549 Auenwald (DE); Schwaderer, Bernhard, D-71554 Weissbach im Tal (DE); Kohn, Ulrich, D-72522 Backnang (DE); Müller-Fiedler, Roland, D-71229 Leonberg (DE)

(56) Entgegenhaltungen:
- EP-A- 0 440 049
- EP-A- 0 474 447
- DE-A- 3 543 558
- APPLIED OPTICS, Bd. 33,Nr. 16, Juni 1994 NEW YORK US, Seiten 3371-3374, XP 000450228 GUANGWEN ZHANG ET AL 'Glass integrated optics circuit for 1.48/1.55- and 1.30/1.55- mu m-wavelength division multiplexing and 1/8 splitting'

## Beschreibung

Die Erfindung betrifft einen optischen Faserverstärker mit mindestens einer Verstärkungsfaser, mit mindestens einer Pumpquelle und mit mindestens einem wellenlängenselektiven Koppler, über den das Pumplicht in die Verstärkungsfaser eingekoppelt wird, und mit einem Trägersubstrat, auf dem passive und aktive oder nur passive oder nur aktive Komponenten des Faserverstärkers integriert sind.

In der optischen Nachrichtentechnik werden optische Faserverstärker benötigt, um Leitungsverluste zu kompensieren. Wenn ein Signal über einen 1:N-Teiler auf sehr viele Teilnehmer aufgeteilt werden soll, so verringert sich die Leistung pro Teilnehmer entsprechend dem Teilerverhältnis. Um genügend Leistung für den einzelnen Teilnehmer zu erhalten bzw. um sehr viele Teilnehmer anschließen zu können, werden vor der Verzweigung ebenfalls optische Faserverstärker eingesetzt. Ein Faserverstärker hat als Verstärkungselement eine erbiumdotierte Glasfaser, durch die das zu verstärkende Licht der Wellenlänge λ₁ hindurchläuft. Das zur Verstärkung erforderliche Pumplicht der Wellenlänge λₚ wird über wellenlängenselektive Koppler in die Verstärkungsfaser eingekoppelt. Für Verteilsysteme mit interaktiven Anschlüssen ist zudem noch ein Rückkanal von jedem Teilnehmer zur Sendestation erforderlich, der zweckmäßigerweise auf der gleichen Faser bei einer anderen Wellenlänge in Gegenrichtung geführt wird. Das Rücksignal darf dabei den Faserverstärker nicht durchlaufen, sondern muß an diesem vorbeigeführt werden. Hierzu sind weitere wellenlängenselektive Koppler erforderlich. Um die Verstärkung zu regeln, sind Monitordioden zur Messung des Eingangslichtpegels, des Ausgangslichtpegels und der Pumplichtleistung erforderlich. Die Monitorsignale müssen über Abzweiger aus den entsprechenden Lichtleitungen entnommen werden. Wichtig ist auch, daß das verstärkte Lichtsignal nicht in die Übertragungsstrecke zurückreflektiert wird, da dies zu Störungen des Sendelasers führen würde. Alle Komponenten des Faserverstärkers müssen daher sehr reflexionsarm aufgebaut sein, wobei zusätzlich noch ein optischer Isolator erforderlich ist. Auch die zur Erzeugung des Pumplichtes erforderlichen Pumplaser sind gegenüber Rückreflexionen des verstärkten Sendelichtes sehr empfindlich und müssen durch Filter geschützt werden. Für eine ausreichend hohe Verstärkung ist eine sehr hohe Leistungsdichte des Pumplichtes in der Verstärkungsfaser erforderlich. Man benötigt deshalb sehr leistungsstarke Pumplaser und einen dünnen Kern der Verstärkungsfaser. Daher ist eine dämpfungsarme Ankopplung von großer Bedeutung.

Es ist bekannt, die für den optischen Faserverstärker erforderlichen wellenlängenselektiven Koppler, Abzweiger und Isolatoren mit faseroptischen Komponenten zu realisieren. Solche Komponenten zeichnen sich durch eine geringe Einfügedämpfung und durch geringe Rückreflexionen aus. Nachteilig an den faseroptischen Komponenten ist die schwierige Handhabung und der große Platzbedarf dieser Komponenten selbst und der für deren Verbindung erforderlichen Spleiße.

Aus diesem Grund wurde in Guangwen Zhang, Seppo Honkanen et al: "Glass integrated optics circuit for 1.48 / 1.55- and 1.30/1.55-µm-wavelength division multiplexing and 1 / 8 splitting" in Applied Optics, 1.6.1994, Vol. 33, No. 16, S. 3371-3374 vorgeschlagen, einige der passiven optischen Komponenten, die für den Faserverstärker erforderlich sind, gemeinsam auf einem Glassubstrat zu integrieren, wobei auf dem gleichen Glassubstrat auch ein 1:8-Teiler für den Anschluß von acht Teilnehmern enthalten ist. Bei dieser integrierten Lösung sind jedoch die Einfügeverluste problematisch, die gegenüber einem Faserverstärker mit faseroptischen Komponenten um 2 bis 5 dB höher liegen, wobei nicht über angekoppelte Fasern, sondern mit Einkopplung über Mikroskopobjektive gemessen wurde.

Aus der EP 0 440 049 B1, ist ein optischer Signalverstärker für stimulierte Emission bekannt, dessen Verstärkungsfaser in einem mit aktivem Material dotierten Glaskörper integriert ist. Außerdem können auch Koppler in dem Glaskörper integriert werden.

Ausgehend von diesem Stand der Technik ist es Aufgabe der Erfindung, einen optischen Faserverstärker mit auf einem Trägersubstrat integrierten passiven und/oder aktiven Komponenten anzugeben, der eine verlustarme Ankopplung an die integrierten Komponenten ermöglicht.

Die Aufgabe wird durch einen Faserverstärker mit den Merkmalen des Patentanspruchs 1 gelöst. Vorteilhafte Weiterbildungen sind in den Unteransprüchen angegeben.

Es wird ein optischer Faserverstärker angegeben mit einem Verstärkungswellenleiter, mit einer Pumpquelle und mit einem wellenlängenselektiven Koppler. Das Pumplicht aus der Pumpquelle wird über den Koppler in den Verstärkungswellenleiter eingekoppelt. Es ist ein Trägersubstrat vorgesehen, auf dem passive (z.B. Koppler, Wellenleiter, Teiler) und aktive Komponenten (z.B. Verstärkungswellenleiter) des Faserverstärkers integriert sind. Weiter ist ein Siliziumträger vorgesehen, der an einer Stirnseite des Trägersubstrats angebracht ist. Der Siliziumträger weist anisotrop geätzte Nuten mit optischen Komponenten auf. Die Pumpquelle ist auf dem Siliziumträger ST1 fixiert. Die optischen Komponenten auf Siliziumträger ST1 und Trägersubstrat GS sind zueinander justiert.

Die Integration von passiven und aktiven Komponenten auf einem Trägersubstrat, z.B. einem InP- oder einem Glassubstrat, kann für einen Faserverstärker nur dann von Vorteil gegenüber einzelnen zusammengespleißten faseroptischen Komponenten sein, wenn eine einfache und verlustarme Ankopplung an z.B. Eingangs- und Ausgangsfaser, Pumplaser, etc. gelingt.

Eine wesentliche Vereinfachung der Ankopplung wird dadurch erreicht, daß mindestens ein Siliziumträger vorgesehen ist, in dem anisotrop geätzte Nuten für optische Komponenten vorgesehen sind und auf dem optoelektronischen Komponenten integriert sind. Es muß nur noch der Siliziumträger relativ zum Trägersubstrat justiert werden. Eine weitere Vereinfachung der Justage wird durch das im Patentanspruch 3 angegebene Merkmal erreicht. Bei der Integration vieler optischer Komponenten auf einem Trägersubstrat sollten das Übersprechen und die Rückreflexionen verhindert werden. Hierzu ist es notwendig, bei Verzweigern und wellenlängenselektiven Kopplern jeweils den nicht benötigten Arm abzusumpfen, d.h. der Arm muß so enden, daß kein Licht zurückgelangen kann.

Ein Ausführungsbeispiel der Erfindung wird anhand der Zeichnungen erläutert. Es zeigen
Fig. 1 einen zweistufigen Faserverstärker,
Fig. 2 die Ankopplung einer Photodiode und
Fig. 3 die Ankopplung eines optischen Sumpfes.

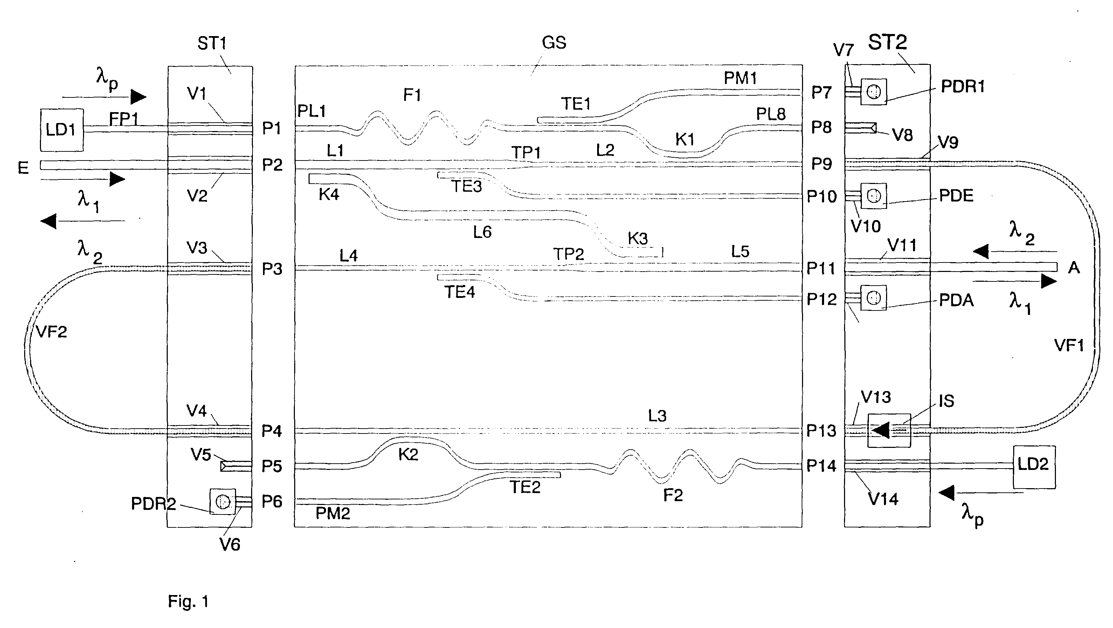

Fig. 1 zeigt als erstes Ausführungsbeispiel einen zweistufigen Faserverstärker mit integriert optischen passiven Komponenten. Auf einem Glassubstrat GS sind die optischen Komponenten, deren Bedeutung nachfolgend beschrieben wird, durch Diffusion über eine Maske hergestellt. An der linken und rechten Stirnseite des Glassubstrates werden zwei Siliziumträger ST1 und ST2 montiert. Aufgabe dieser beiden Siliziumträger ist es, über anisotrop geätzte V-Nuten die anzukoppelnden Fasern und weitere optische und optoelektronische Bauteile aufzunehmen.

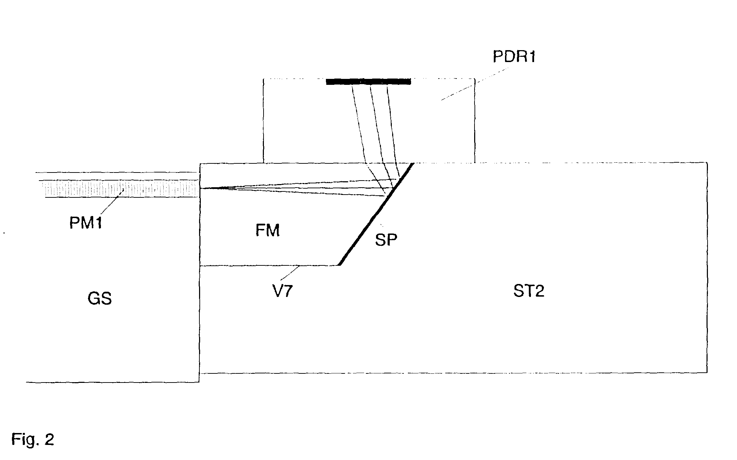

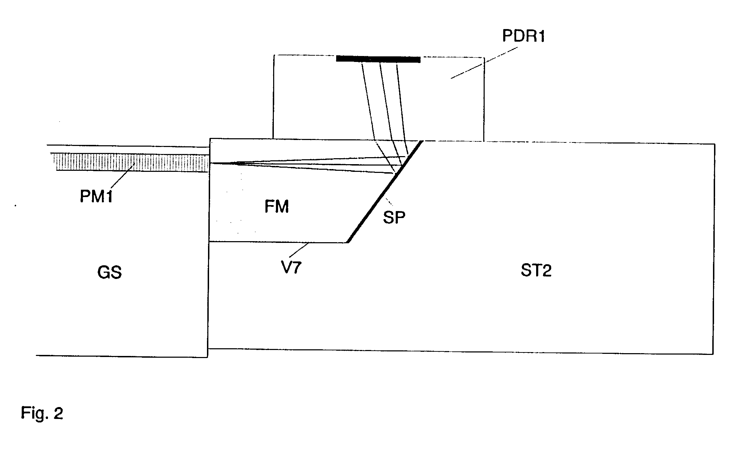

Die Funktion des erfindungsgemäßen Faserverstärkers wird nun anhand der Strahlführung und der einzelnen Komponenten erläutert. Das von der Zentrale zu den Teilnehmern gesendete Licht der Wellenlänge λ₁ tritt über die senderseitige Eingangsfaser E, die in der V-Nut V2 auf dem Siliziumträger ST1 gehalten wird, und den Port P2 in den integrierten Lichtwellenleiter L1 ein. Das Sendesignal muß eine sehr hohe Datenrate übertragen. Überlicherweise wird hierfür eine Wellenlänge von 1,55 µm gewählt. Die Übertragungsfaser im Eingang E ist üblicherweise eine Einmodenfaser mit einem Kerndurchmesser von 10 µm. Einen entsprechenden Querschnitt muß daher auch der Eingangslichtwellenleiter L4 haben, um die Ankoppelverluste zu minimieren. Zur Verstärkung wird das Sendesignal über den Port P9 auf eine erste erbiumdotierte Verstärkungsfaser VF1 geführt. Die Verstärkungsfaser hat aber, wie oben ausgeführt, einen engeren Kerndurchmesser von 6 µm. Um eine verlustarme Ankopplung zu erreichen, wird der Querschnitt des integrierten Lichtwellenleiters L1 über den integrierten Taper TP1 in den Lichtwellenleiter L2 überführt, dessen Querschnitt dem engeren Querschnitt der erbiumdotierten Verstärkungsfaser angepaßt ist. Das zum Pumpen der Verstärkungsfaser benötigte Licht der Wellenlänge λₚ wird von der Laserdiode LD1 erzeugt. Der Faserabschnitt FP1, der in der V-Nut V1 auf dem Siliziumträger ST1 gehalten wird, wird am Port P1 in den Wellenleiter PL1 eingekoppelt. Dieser Wellenleiter bildet erfindungsgemäß durch Krümmungen ein Filter F1. Die Krümmungsradien sind dabei so gewählt, daß das Pumplicht mit der kürzeren Pumpwellenlänge λₚ noch geführt wird. Für das Pumplicht wird dabei eine Wellenlänge von 980 nm gewählt. Das Sendelicht hat eine Wellenlänge von 1550 nm und das Licht des Rückkanals von 1300 nm. Beide Wellenlängen werden bei geeigneter Wahl der Krümmungsradien von dem Filter abgehalten, da die längeren Wellenlängen an den Krümmungen nicht mehr geführt werden können. Ein solches Krümmungsfilter läßt sich erfindungsgemäß auch faseroptisch herstellen, indem die Faser FP1 in einigen engen Radien aufgewickelt wird. Der erforderliche Krümmungsradius des faseroptischen oder integrierten erfindungsgemäßen Krümmungsfilters hängt vom Brechzahlprofil des verwendeten Lichtwellenleiters und vom Abstand der zu trennenden Wellenlängen ab. Ein solches Krümmungsfilter wirkt als Kantenfilter, das kürzere Wellenlängen durchläßt und längere Wellenlängen sperrt. Im Teiler TE1 wird ein kleiner Anteil des Pumplichtes abgezweigt und über den integrierten Lichtwellenleiter PM1 und den Port P7 in die Monitor-Photodiode PDR1 zur Regelung der Pumplichtleistung geleitet. Die Photodiode ist erfindungsgemäß planar auf dem Siliziumträger ST2 montiert. Unterhalb der Photodiode befindet sich eine anisotrop geätzte V-Nut V2, deren Seitenflächen mit einer spiegelnden Metallschicht SP beschichtet sind. Die dem Glassubstrat zugewandte Seite der Nut ist offen. Die V-Nut ist mit einem transparenten Füllmaterial FM (siehe Detailzeichnung in Fig. 2) ausgefüllt. Das Füllmaterial hat nach dem Aushärten eine solche Härte, daß es bei der Stirnflächenbearbeitung des Siliziumträgers ST2 mitpoliert werden kann. Die V-Nut hat erfindungsgemäß eine Querschnittsfläche, die wesentlich größer als der Querschnitt des anzukoppelnden integrierten Lichtwellenleiters ist. Dejustierungen zwischen dem integrierten Lichtwellenleiter auf dem Glassubstrat und der V-Nut führen somit nicht zu einem Koppelverlust, solange sie kleiner sind als die Differenz der lateralen Dimensionen zwischen der V-Nut und dem integrierten Lichtwellenleiter. Das aus dem Lichtwellenleiter austretende Lichtbündel breitet sich als Freistrahl im Füllmaterial FM der V-Nut V2 aus und trifft nach Reflexion an der Stirnfläche der V-Nut auf die Photodiode. Anstelle des transparenten Füllmaterials FM kann die V-Nut auch leer bleiben. Das Lichtbündel hat dann eine etwas größere Divergenz. Ebenso kann auch eine Faser mit einem Kerndurchmesser eingelegt werden, der groß ist gegenüber dem Durchmesser des integrierten Wellenleiters. Die gleichen Photodioden-Ankopplungen - wie oben beschrieben - sind ebenfalls an den Ports P5, P10 und P12.

Hinter dem Teiler TE1 wird über den wellenlängenselektiven Koppler K1 das Pumplicht in den Wellenleiter L2 eingekoppelt. Der wellenlängenselektive Koppler K1 ist so ausgelegt, daß der überwiegende Teil des Pumplichtes mit der Wellenlänge λₚ übergekoppelt wird und das Sendelicht mit der Wellenlänge λ₁ nicht übergekoppelt wird. Aufgrund technologischer Toleranzen muß aber immer damit gerechnet werden, daß ein geringer Anteil des Pumplichtes in den durchgehenden Zweig PL8 des Kopplers K1 gelangt. Damit dieses Licht nicht am Ende des Wellenleiters zurückreflektiert wird und dabei den Sendelaser am Beginn der Sendeleitung oder den Pumplaser stört, ist es erforderlich, diese Reflexion zu vermeiden. Dies wird durch eine Anordnung erreicht, die in Fig. 3 dargestellt ist. Diese Anordnung entspricht der Anordnung in Fig. 2 mit dem Unterschied, daß hier keine Photodiode aufgesetzt ist. Das über die V-Nut eintretende Licht wird nach oben wegreflektiert. Die Nut kann entweder ungefüllt sein oder mit einem Füllmaterial FMA ausgefüllt sein, dessen Brechungsindex dem des angekoppelten Wellenleiters PL8 angepaßt ist. Zur Erhöhung der Rückflußdämpfung kann das Füllmaterial noch mit einem lichtabsorbierenden Zusatz versehen sein. Die gleiche Absumpfung befindet sich am Port P5.

Eine Zusammenfassung mehrerer Koppler ist sinnvoll, um die Baulänge zu reduzieren. So ist eine Zusammenfassung der Koppler K1 und TE1 möglich.

Das aus dem Wellenleiter L2 durch den Koppler K1 hindurchgehende Sendelicht tritt gemeinsam mit dem vom Koppler K1 übergekoppelten Pumplicht über den Port P9 in die erste Verstärkungsfaser VF1 ein und wird dort verstärkt. Zur Vermeidung von Rückreflexionen wird in den Lichtweg ein Isolator IS eingebaut. Dieser Isolator kann entweder ein bekannter Isolator mit Faseranschlüssen auf beiden Seiten sein. Zur Erzielung eines kompakteren Aufbaus ist es aber vorteilhafter, diesen Isolator ebenfalls in dem Siliziumträger zu integrieren, also beispielsweise in einzelnen Komponenten des Isolators in V-Nuten im Siliziumträger einzubringen. Im Port P13 wird das in der ersten Stufe verstärkte Sendelicht in den integrierten Wellenleiter L3 eingekoppelt. In diesen Wellenleiter wird im wellenlängenselektiven Koppler 13 noch einmal Pumplicht eingekoppelt. Dieses Pumplicht der Wellenlänge λₚ wird in der LD2 erzeugt. Der Lichtzuführungs- und -regelpfad ist ebenso aufgebaut wie bei der ersten Pumplichtquelle.

Am Port P4 wird das Sendelicht und das Pumplicht in eine zweite Verstärkungsfaser VF2 eingekoppelt. Das zum zweitenmal verstärkte Sendelicht tritt über den Port P3 in den integrierten Lichtwellenleiter L4 ein. Die integrierten Lichtwellenleiter L2, L3 und L4 haben alle Querschnitte, die an den engeren Querschnitt der Verstärkungsfasern VF1 und VF2 angepaßt sind. Um den Querschnitt wieder an den der Ausgangsfaser A im Port P11 anzupassen, ist ein integrierter Taper TP2 vorgesehen.

Das auf derselben Faserstrecke E - A in Gegenrichtung übertragene Rücksignal der Teilnehmer zur Zentrale hat die Wellenlänge λ₂, für die üblicherweise 1300 nm gewählt werden. Dieses Licht darf die Verstärkungsstrecke nicht durchlaufen, da es sonst dort gedämpft würde. Daher wird das Rücksignal über die beiden wellenlängenselektiven Koppler und den Wellenleiter L6 an den beiden Verstärkerstufen vorbeigeführt. Diese Komponenten sind ebenfalls auf dem Glassubstrat GS integriert.

Zur Überwachung des Ein- und Ausgangslichtpegels des Sendesignals, die zur Regelung der Verstärkung erforderlich ist, werden erfindungsgemäß über die integrierten Teiler TE3 und TE4 geringe Teile des Sendelichtes abgezweigt und über die integrierten Wellenleiter und die Ports P10 und P12 auf die Photodioden PDE und PDA geführt.

Das Glassubstrat GS hat auf beiden Seiten eine Vielzahl von Ports, die alle mit möglichst geringer Dämpfung und möglichst geringem Justageaufwand an die entsprechenden Komponenten angekoppelt werden müssen. Zur Erreichung einer geringen Dämpfung ist es erforderlich, die Justage aktiv durchzuführen. Bei der aktiven Justage auf beiden Seiten eines Substrates mit integrierten Wellenleitern tritt prinzipiell das Problem auf, daß bei der Justage einer Seite die andere Seite schon mindestens groß justiert sein muß. Bei der Ankopplung von integrierten Einmodenlichtwellenleitern an Einmodenfasern muß daher bereits eine sehr gute Vorjustage am gegenüberliegenden Port vorhanden sein. Da bei der angegebenen Lösung nicht nur die justagekritischen Wellenleiter-Wellenleiter-Ports, sondern auch die justageunkritischen Wellenleiter-V-Nut-Ports vorgesehen sind, ist hier eine vorteilhafte Justagestrategie möglich. Durch die photolithographische Erzeugung der V-Nuten auf den Siliziumträgern und der Wellenleiter auf dem Glassubstrat sind die gegenseitigen Positionen der Ports auf den zu verkoppelnden Trägern schon mit hinreichender Präzision festgelegt. Die zu verkoppelnden Stirnflächen werden eben poliert, so daß keine axialen Versätze und Kippwinkelfehler auftreten können.

Das in Fig. 1 gezeigte Ausführungsbeispiel bedeutet keine Einschränkung der beschriebenen erfindungsgemäßen Vorschläge auf eben dieses Beispiel. Variationen dieses Ausführungsbeispiels können dadurch sinnvoll sein, daß statt eines zweistufigen Faserverstärkers nur ein einstufiger Verstärker eingesetzt wird. Ebenso lassen sich statt einer Ausgangsfaser A eine größere Anzahl von N Ausgangsfaser A₁ bis A_{N} einsetzen, wobei der hierzu erforderliche 1:N-Teiler mit dem Glassubstrat integriert wird. Für Faserverstärker, die direkt hinter dem Sendelaser in der Zentrale eingesetzt werden, kann es sinnvoll sein, das Rücksignal der Wellenlänge λ₂ nicht wieder über einen Koppler in die Eingangsfaser E zu führen, sondern in einem separaten Ausgang dem Empfänger für die Rückkanäle direkt zuzuführen.

Eine weitere vorteilhafte Variante der Erfindung besteht darin, daß auch der Verstärkungswellenleiter durch entsprechende Dotierung mit Erbium im Glassubstrat integriert sein kann.

## Patentansprüche

1. Optischer Faserverstärker mit mindestens einem Verstärkungswellenleiter (VF1), mit mindestens einer Pumpquelle (LD1) und mit mindestens einem wellenlängenselektiven Koppler (K1), über den das Pumplicht in die Verstärkungswellenleiter eingekoppelt wird, mit einem Trägersubstrat (GS), auf dem passive und aktive oder nur passive oder nur aktive Komponenten des Faserverstärkers integriert sind, dadurch gekennzeichnet,
daß neben dem Trägersubstrat (GS) mindestens ein Siliziumträger (ST1) vorgesehen ist,
daß der Siliziumträger (ST1) anisotrop geätzte Nuten aufweist, in denen optische Komponenten fixiert sind und Lichtwellenleiterenden einbringbar sind,
daß die Pumpquelle (LD1) auf dem Siliziumträger (ST1) montiert ist und
daß der Siliziumträger (ST1) an einer Stirnseite des Trägersubstrats (GS) derart angebracht ist, daß die Komponenten auf dem Siliziumträger (ST1) zu den Komponenten auf dem Trägersubstrat (GS) justiert sind.

2. Optischer Faserverstärker nach Anspruch 1, dadurch gekennzeichnet, daß weitere optoelektronische Komponenten auf dem Siliziumträger (ST1) montiert sind.

3. Optischer Faserverstärker nach einem der Ansprüche 1 oder 2, dadurch gekennzeichnet, daß mindestens ein optoelektrischer Wandler (PDR2) mit seiner lichtempfindlichen Fläche zur Oberfläche des Siliziumträgers (ST1) hin, auf diesem über dem Ende einer V-Nut montiert ist, daß die V-Nut verspiegelt ist und eine Querschnittsfläche aufweist, die erheblich größer als die eines Wellenleiters ist.

4. Optischer Faserverstärker nach einem der bisherigen Patentansprüche, dadurch gekennzeichnet, daß auf dem Trägersubstrat (GS) zwischen Pumpquelle (LD1) und dem Koppler (K1) zur Einkopplung des Pumplichts in die Verstärkungsfaser (VF1) ein wellenlängenselektives Filter (F1) vorgesehen ist, das Licht der Pumpwellenlänge führt und Licht der Übertragungswellenlänge nicht führt.

5. Optischer Faserverstärker nach Anspruch 4, dadurch gekennzeichnet, daß das wellenlängenselektive Filter (F1) ein Wellenleiter mit Krümmungen ist.

6. Optischer Faserverstärker nach einem der Patentansprüche 1 bis 5, dadurch gekennzeichnet, daß zur Überwachung oder Regelung des Sende- oder Pumplichtes ein Teiler (TE1) vorgesehen ist, der auf dem Trägersubstrat (GS) integriert ist und einem Teil des Sende- oder Pumplichtes auskoppelt, das über einen integrierten Wellenleiter auf eine Photodiode (PDR1) fällt, die sich auf dem Siliziumträger (ST1) befindet.

7. Optischer Verstärker nach einem der Patentansprüche 1 bis 6, dadurch gekennzeichnet, daß auf dem Trägersubstrat (GS) ein Wellenleiter mit einer adiabatischen Querschnittsänderung (Taper) integriert ist.

8. Optischer Faserverstärker nach einem der Patentansprüche 1 bis 7, dadurch gekennzeichnet, daß der Siliziumträger (ST1) eine verspiegelte V-Nut (V8) aufweist, die als optischer Sumpf eingesetzt wird.

9. Optischer Faserverstärker nach einem der Patentansprüche 1 bis 8, dadurch gekennzeichnet, daß zwei Siliziumträger (ST1, ST2) vorgesehen sind, die an gegenüberliegenden Stirnseiten des Trägersubstrates (GS) angebracht sind.

10. Optischer Faserverstärker nach einem der Ansprüche 1 bis 9, dadurch gekennzeichnet, daß mindestens eine V-Nut im Siliziumträger mit transparentem Füllmaterial (FM) gefüllt ist.

## Claims

1. Optical fibre amplifier having at least one amplification waveguide (VF1), having at least one pump source (LD1) and having at least one wavelength-selective coupler (K1) via which the pump light is coupled into the amplification waveguide, having a carrier substrate (GS) on which passive and active or only passive or only active components of the fibre amplifier are integrated, characterized in that, apart from the carrier substrate (GS), at least one silicon carrier (ST1) is provided, in that the silicon carrier (ST1) has anisotropically etched grooves in which optical components are fixed and optical waveguide ends can be introduced, in that the pump source (LD1) is mounted on the silicon carrier (ST1) and in that the silicon carrier (ST1) is fitted on one end of the carrier substrate (GS) in such a manner that the components on the silicon carrier (ST1) are adjusted in relation to the components on the carrier substrate (GS).

2. Optical fibre amplifier according to Claim 1, characterized in that further optoelectronic components are mounted on the silicon carrier (ST1).

3. Optical fibre amplifier according to one of Claims 1 or 2, characterized in that at least one optoelectric converter (PDR2) is mounted, with its light-sensitive surface towards the surface of the silicon carrier (ST1), on the latter over the end of a V-groove, in that the V-groove is silvered and has a cross-sectional area which is considerably greater than that of a waveguide.

4. Optical fibre amplifier according to one of the previous patent claims, characterized in that a wavelength-selective filter (F1) is provided on the carrier substrate (GS) between pump source (LD1) and the coupler (K1) for coupling the pump light into the amplification fibre (VF1), said filter guiding the light of the pump wavelength and not guiding light of the transmission wavelength.

5. Optical fibre amplifier according to Claim 4, characterized in that the wavelength-selective filter (F1) is a waveguide with curves.

6. Optical fibre amplifier according to one of Patent Claims 1 to 5, characterized in that , to monitor or control the transmitted or pump light, a divider (TE1) is provided, which is integrated on the carrier substrate (GS) and couples out part of the transmitting or pump light which is incident, via an integrated waveguide, on a photodiode (PDR1) which is located on the silicon carrier (ST1).

7. Optical amplifier according to one of Patent Claims 1 to 6, characterized in that a waveguide having an adiabatic cross-sectional changer (taper) is integrated on the carrier substrate (GS).

8. Optical fibre amplifier according to one of Patent Claims 1 to 7, characterized in that the silicon carrier (ST1) has a silvered V-groove (V8) which is used as an optical sink.

9. Optical fibre amplifier according to one of Patent Claims 1 to 8, characterized in that two silicon carriers (ST1, ST2) are provided, which are fitted on opposite ends of the carrier substrate (GS).

10. Optical fibre amplifier according to one of Claims 1 to 9, characterized in that at least one V-groove in the silicon carrier is filled with transparent filling material (FM).

## Revendications

1. Amplificateur à fibres optiques ayant au moins un guide d'ondes d'amplification (VF1), au moins une source de pompage (LD1) et au moins un coupleur sélectif en longueur d'onde (K1) par lequel la lumière de pompage est couplée dans les guides d'ondes d'amplification,
- un substrat de support (GS) dans lequel sont intégrés des composants passifs et actifs ou seulement passifs ou seulement actifs, de l'amplificateur à fibres,
caractérisé en ce que
- à côté du substrat de support (GS), il est prévu au moins un support en silicium (ST1),
- le support en silicium (ST1) comporte des rainures réalisées par attaque chimique anisotrope dans lesquelles sont fixés les composants optiques et dans lesquelles peuvent être introduites les extrémités de guides de lumière,
- la source de pompage (LD1) est montée sur le support de silicium (ST1), et
- le support en silicium (ST1) est monté sur une face frontale du substrat de support (GS) de façon que les composants du support en silicium (ST1) soient ajustés par rapport aux composants du substrat de support (GS).

2. Amplificateur à fibres optiques selon la revendication 1,
caractérisé en ce que
d'autres composants optoélectroniques sont montés sur le support en silicium (ST1).

3. Amplificateur à fibres optiques selon l'une des revendications 1 ou 2,
caractérisé par
au moins un convertisseur optoélectronique (PDR2) dont la surface photosensible est tournée vers la surface du support en silicium (ST1) en étant montée sur celui-ci par l'extrémité d'une rainure à section en V, cette rainure à section en V étant traitée en miroir et ayant une surface de section beaucoup plus importante que celle d'un guide d'ondes.

4. Amplificateur à fibres optiques selon l'une des revendications précédentes,
caractérisé en ce que
sur le substrat de support (GS), entre la source de pompage (LD1) et le coupleur (K1) pour coupler la lumière de pompage dans les fibres d'amplification (VF1), il est prévu un filtre sélectif en longueur d'onde (F1) qui conduit la lumière à la longueur d'onde de pompage et arrête la lumière de longueur d'onde supérieure à celle de transmission.

5. Amplificateur à fibres optiques selon la revendication 4,
caractérisé en ce que
le filtre sélectif en longueur d'onde (F1) est un guide d'ondes présentant des parties courbes.

6. Amplificateur à fibres optiques selon l'une quelconque des revendications 1 à 5,
caractérisé en ce qu'
un diviseur (TE1) intégré sur le substrat de support (GS) surveille ou régule la lumière d'émission au pompage, et une partie de la lumière d'émission de pompage découplée arrive sur une photodiode (PDR1) par l'intermédiaire d'un guide d'ondes intégré, cette photodiode étant prévue sur le support au silicium (ST1).

7. Amplificateur à fibres optiques selon l'une quelconque des revendications 1 à 6,
caractérisé en ce qu'
un guide d'ondes à variation de section adiabatique (cône) est intégré dans le substrat de support (GS).

8. Amplificateur à fibres optiques selon l'une quelconque des revendications 1 à 7,
caractérisé en ce que
le support en silicium (ST1) comporte une rainure à section en V (V8) traitée comme un miroir et utilisée comme puits optique.

9. Amplificateur à fibres optiques selon l'une quelconque des revendications 1 à 8,
caractérisé par
deux supports en silicium (ST1, ST2) prévus sur les faces frontales opposées du substrat de support (GS).

10. Amplificateur à fibres optiques selon l'une des revendications 1 à 9,
caractérisé en ce qu'
au moins une rainure à section en V du support en silicium est remplie de matière de remplissage transparente (FM).
